# FASCICULE DE BREVET EUROPEEN

(11) **EP 1 168 719 B1**
(45) Date de publication et mention de la délivrance du brevet: **06.09.2006**
(21) Numéro de dépôt: 01401662.0
(22) Date de dépôt: 22.06.2001
(51) Int. Cl.: H04L 12/46

(54) **Routeur Virtuel Distribué avec Redondance pour Réséaux à Topologie Changeante**
Verteilter Virtueller Router mit Redundanz für Netzwerken mit ändernder Topologie
Distributed Virtual Router with Redundancy for Networks with Changing Topology

(30) Priorité: 30.06.2000 FR 0008514
(43) Date de publication de la demande: 02.01.2002
(73) Titulaire: Thales, 75008 Paris (FR)
(72) Inventeur: Bavant, Marc, 94117 Arcueil Cedex (FR); Delattre, Michel, 94117 Arcueil Cedex (FR)
(74) Mandataire: Dudouit, Isabelle

(56) Documents cités:
- US-A- 5 777 994
- CHEN X ET AL: "EVOLUTION OF ATM INTERNETWORKING" BELL LABS TECHNICAL JOURNAL,BELL LABORATORIES,US, vol. 2, no. 2, 21 mars 1997 (1997-03-21), pages 82-110, XP000695170 ISSN: 1089-7089
- S KNIGHT ET AL: "Virtual Router Redundancy Protocol" IETF RFC2338, AVAILABLE ON THE INTERNET, avril 1998 (1998-04), XP002135272
- "SWITCHED VIRTUAL NETWORKS INTERNETWORKING MOVES BEYOND BRIDGES AND ROUTERS" DATA COMMUNICATIONS,US,MCGRAW HILL. NEW YORK, vol. 23, no. 12, 1 septembre 1994 (1994-09-01), pages 66-70,72,74,, XP000462385 ISSN: 0363-6399

## Description

La présente invention concerne un routeur virtuel distribué sur un réseau support et un procédé de routage de paquets entre plusieurs réseaux locaux virtuels en s'appuyant sur un réseau de commutation dont le graphe est éventuellement variable du fait de la mobilité de ses noeuds.

L'expression « routeur virtuel distribué » est utilisée pour désigner le procédé de routage. Le réseau de commutation sous-jacent est aussi appelé « réseau support ».

Les noeuds du réseau communiquent entre eux par exemple à l'aide d'artères dont la configuration ou l'existence peuvent évoluer dans le temps, ceci conduisant à une mobilité des noeuds.

L'invention s'applique notamment pour des paquets au format IP du protocole « INTERNET ».

La présente invention trouve par exemple son application dans les réseaux de type ATM.

Elle trouve son application pour l'émulation de routage dans tous les réseaux utilisant des techniques de commutation.

Selon l'art antérieur, le routage est effectué à l'aide d'un équipement dénommé routeur qui effectue le relayage des paquets entrant sur un joncteur de cet équipement vers un joncteur de sortie en fonction de l'adresse IP de destination du paquet et en fonction d'une table de routage.

Lorsque le routage s'effectue entre réseaux locaux très nombreux et très éloignés les uns des autres, un réseau maillé de routeurs composés de routeurs d'accès et de routeurs de transits est généralement utilisé.

Une telle configuration présente certains inconvénients, notamment les suivants :
1) le temps de transit d'un paquet dans le réseau est altéré par la multiplicité des routeurs à traverser,
2) la notion de qualité de service (QoS) n'est pas prise en compte,

Un moyen de pallier les inconvénients précités a consisté par exemple à intégrer le routage IP (niveau 3) avec une technologie de commutation (niveau 2), telle que la commutation ATM (« abréviation anglo-saxonne de Asynchronous Transfer Mode »). Trois axes ont été plus particulièrement développés.

Par exemple, la technologie dite du gigarouteur réalise une fonction de routage au coeur d'un commutateur en tenant compte de l'adresse IP destinataire dans le processus de commutation. Dans le cadre de l'ATM, l'adresse IP destinataire est prise en compte lors de la traduction des voies logiques.

La technologie de commutation d'étiquettes identifie des flots au sein du trafic IP et par un processus de signalisation associe à ces flots des étiquettes utilisées par la commutation de niveau 2. Appliquée à l'ATM, un indicateur de voie logique VPI/VCI est associée à un flot. Cette technologie est en cours de normalisation à l'IETF sous le nom de *Multiprotocol Label Switching* (MPLS).

La technologie connue sous le nom « d'émulation de réseaux locaux et de routage » permet de créer des circuits virtuels reliant directement les applications communicantes (courts-circuits) en utilisant un protocole spécifique qui définit des entités clientes, des entités serveurs, les connexions entre ces entités et les règles d'établissement de courts-circuits entre clients. Dans le cadre de l'ATM, cette technologie fait l'objet d'une norme sous les vocables de Local Area Network Emulation ou encore sous l'abréviation anglo-saxonne (LANE) et Multiprotocol Over ATM ou MPOA.

Cette dernière technologie repose sur la mise en oeuvre de fonctions essentielles centralisées serveur, routeurs de flots à durée de vie brève, pouvant être doublées, voire triplées pour assurer une redondance minimale. Toutefois lorsque le réseau se scinde en plusieurs composantes non interconnectées, rien ne garantit que chaque composante disposera de la totalité des fonctions essentielles au service, ni que lorsque deux réseaux sont réunis, les fonctions redondantes (offertes par chacune des composantes prises individuellement) fusionnent harmonieusement, c'est-à-dire de façon transparente pour l'usager. Il est fait référence aux documents suivants, reflétant l'état de la technique :

Le brevet US-A-5 777 994 concerne un commutateur ATM permettant une interconnexion électrique entre un réseau local ATM en mode connecté et un réseau local en mode sans connexion.

Le document « Evolution of ATM Internetworking » de X.Chen publié dans le journal Bell Labs Technical Journal - Spring 1997 divulgue de manière générale différentes infrastructures relatives aux réseaux ATM et leur façon de fonctionner.

L'objet de l'invention concerne notamment un réseau support comportant un routeur virtuel distribué un réseau support, ledit réseau support comportant une ou plusieurs composantes, chacune des composantes comportant au moins deux noeuds, communiquant entre eux à l'aide d'une artère, chaque noeud comporte une fonction d'accès et des fonctions serveurs caractérisé en ce que au moins une composante dudit réseau comporte les éléments suivants :
- plusieurs LANs émulés, chacun desdits LANs émulés offrant un service de pontage et étant désigné par un identificateur i, et étant appelé ELANi-pont dans la suite, chaque ELANi-pont étant relié à un réseau virtuel VLANi,
- au moins un LAN émulé, appelé ELAN transit, où du point de vue du routage toutes les fonctions d'accès d'une même composante sont adjacentes via ledit ELAN transit,
- au niveau d'une fonction d'accès,
   - des clients d'émulation de réseau local, appelés LEC routeurs, adaptés pour relier la fonction d'accès à au moins un ELANi-pont associé à un VLANi, seuls lesdits LEC routeurs sont activés en respectant la correspondance avec les VLANi desservis, les autres restant inactifs,
   - des moyens d'identification des VLANi desservis par la fonction d'accès,
   - des clients d'émulation de réseau local, appelés LEC transit, pour relier l'ELAN transit à la fonction d'accès.

Les moyens d'identification peuvent être une liste définie de la manière suivante : pour une composante du réseau comprenant m noeuds, donc m listes Lm, l'intersection de deux quelconques des listes Lm est l'ensemble vide.

Le réseau comporte, par exemple, une fonction d'élection implantée au niveau de la fonction d'accès dialoguant avec les fonctions homologues par échange de paquets sur les ELANi-pont en utilisant les LECs routeurs.
La fonction d'élection comprend par exemple le protocole normalisé VRRP.
Le réseau peut être des réseaux supports de type ATM avec des paquets de données de type IP.

L'invention concerne aussi un procédé de routage dans un réseau de commutation comportant une ou plusieurs composantes, la ou les composantes comportant au moins deux noeuds X, Y reliés par une artère de communication, chacun des noeuds comprenant une fonction d'accès, caractérisé en ce que au moins une composante dudit réseau comporte plusieurs LANs émulés, chacun desdits LANs émulés offrant un service de pontage et étant désigné par un identificateur i, et étant appelé ELANi-pont dans la suite, chaque ELANi-pont étant relié à un réseau virtuel VLANi, en ce que ladite composante comporte au moins un LAN émulé, appelé ELAN transit, où du point de vue du routage toutes les fonctions d'accès d'une même composante sont adjacentes via ledit ELAN transit, en ce que la fonction d'accès comprend des clients d'émulation de réseau local, appelés LEC routeurs, adaptés pour relier la fonction d'accès à au moins un ELANi-pont associé à un VLANi, seuls sont activés les LEC routeurs qui correspondent avec les VLANi desservis, les autres restent inactifs, et en ce que ladite fonction d'accès comprend un client d'émulation de réseau local, appelé LEC transit, pour relier l'ELAN transit à la fonction d'accès,
le procédé comporte au moins une étape où la fonction d'accès relaye un paquet de données reçus sur un des LEC, ledit LEC étant un LEC routeur ou un LEC transit, de la manière suivante :
a) si le destinataire du paquet est une fonction interne de routage implantée au niveau d'un noeud X(2), remettre directement le paquet à ladite fonction,
b) si le destinataire du paquet est un VLANi desservi par la fonction d'accès, relayer le paquet de données vers le LEC routeur du noeud X(2) qui correspond avec ledit VLANi desservi,
c) si le destinataire du paquet est un VLANi non desservi, relayer le paquet vers le LEC transit d'un noeud Y(2).

La fonction d'accès peut comprendre une liste identifiant les VLANi desservis, une table de routage, et une fonction de relayage, en ce que l'étape b) est effectuée de la manière suivante :
- si le VLAN destinataire d'identificateur j appartient à la liste, activer la fonction de relayage de la fonction d'accès et relayer le paquet de données vers le LEC routeur, ayant pour identificateur l'identificateur du VLAN destinataire,
et en ce que l'étape c) est effectuée de la manière suivante :
- si le VLAN destinataire n'appartient pas à la liste, relayer le paquet de données vers le LEC transit mentionné dans la table de routage.
L'étape de relayage est par exemple effectuée pour un paquet de données reçu sur le LEC routeur implanté dans une fonction d'accès.

L'étape de relayage peut être effectuée pour un paquet de données reçu sur le LEC transit implantée dans une fonction d'accès.
Le procédé utilise par exemple un réseau support de type ATM et des paquets de données IP.
La présente invention comporte notamment les avantages suivants :
- elle assure aux usagers des composantes non interconnectées, un service de routage équivalent à celui offert par le réseau complet,
- en cas de fusion de plusieurs composantes, elle permet la fusion sans redondances des fonctions offertes.

D'autres caractéristiques et avantages de l'invention apparaîtront à l'aide de la description qui va suivre faite à titre illustratif et nullement limitatif en regard des figures annexées où :
- la figure 1 représente une vue générale d'un réseau,
- la figure 2 est une vue générale du réseau de la figure 1 après scission en deux composantes,
- la figure 3 représente une architecture d'un commutateur selon l'invention,
- la figure 4 montre une fonction d'accès IP selon l'invention,
- la figure 5 représente un exemple d'architecture de routeur virtuel distribué selon l'invention, et
- la figure 6 une architecture de routeur après scission de l'architecture décrite à la figure 5.

Le procédé selon l'invention ou « routeur virtuel distribué » a notamment pour but d'offrir un service de routage entre plusieurs réseaux locaux virtuels ou VLANs abréviation anglo-saxonne de (virtual local area network) en s'appuyant sur un réseau de commutation dont le graphe est variable du fait de la mobilité de ses noeuds.

En effet, au cours du temps le réseau de commutation est susceptible de se scinder en multiples composantes non interconnectées, une composante étant formée par exemple de plusieurs noeuds communiquant au moyen d'artères, et/ou de s'étendre par l'interconnexion de telles composantes. Au plus, la scission d'un réseau peut conduire à un nombre de composantes égal au nombre de commutateurs ou noeuds du réseau.

La description donnée ci-après à titre illustratif et nullement limitatif concerne un réseau support ATM, et s'applique à l'émulation de routage de paquets IP. Elle peut aussi être utilisée dans tous les réseaux mettant en oeuvre d'autres technologies de commutation et de routage.

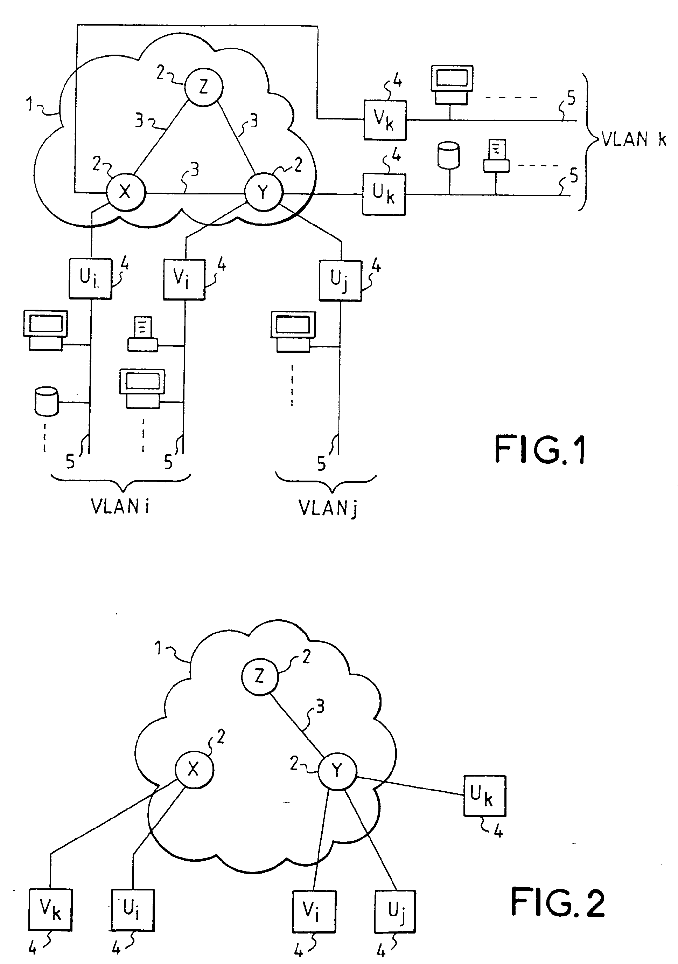

La figure 1 représente une vue d'un réseau ATM 1 (niveau 2) comportant plusieurs commutateurs 2 (correspondant par exemple aux noeuds X, Y et Z du réseau) et plusieurs artères 3, chacune des artères reliant deux commutateurs. Ce réseau a notamment pour fonction d'interconnecter, en émulation de réseau local, différents équipements 4 jouant le rôle de passerelles entre plusieurs réseaux ethernet 5, dénotés Ui, Vi, Uj, et Vk auxquels ils sont raccordés et le réseau ATM 1. Différentes stations peuvent être connectées à chaque réseau ethernet.

Un réseau éthernet désigné par un identificateur i, j, ....est relié à un VLAN désigné par le même identificateur.

Ainsi, dans l'exemple de la figure 1, les réseaux Ui et Vi correspondent au même VLANi, le réseau Uj au VLANj et les réseaux Uk, Vk au VLANk.

Le réseau ATM 1 offre un service de pontage selon l'art antérieur par exemple entre les différents réseaux appartenant à un même VLAN et un service de routage selon l'invention par exemple entre les trois VLANs VLANi, VLANj et le VLANk.

La figure 2 représente un réseau comportant des éléments identiques à ceux décrits à la figure 1 et ayant les mêmes références, dans lequel le noeud X est isolé du reste du réseau. Les noeuds Y et Z sont reliés par une artère de communication 3. Le réseau comporte deux composantes, une première composante comprenant le noeud X isolé et une deuxième composante comprenant les deux noeuds X et Y et l'artère de communication 3.

L'objet de l'invention est notamment de proposer une architecture de commutateur adaptée pour assurer les services d'intercommunication entre les réseaux au sein de chaque composante, c'est-à-dire, au sein de la première composante le routage entre Ui et Vk et au sein de la deuxième composante le routage entre Vi, Uj et Uk.

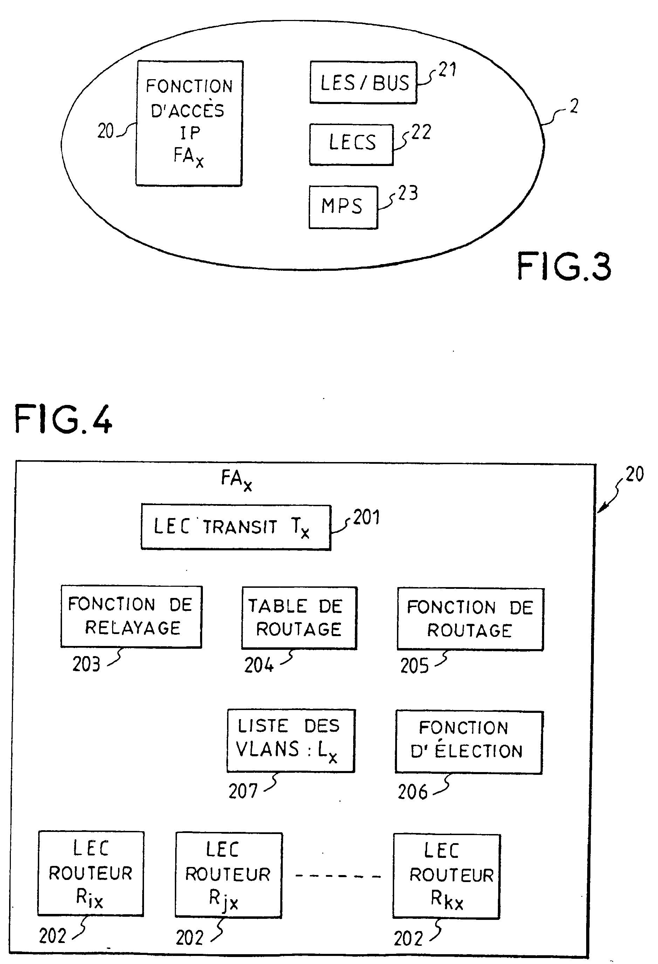

Le commutateur 2 détaillé à la figure 3 comporte par exemple :
- une fonction d'accès IP 20 selon l'invention qui est détaillée à la figure 4,
- une fonction LES/BUS 21, abréviation anglo-saxonne de LAN Emulation Server/ Broadcast or Unknown Server,
- une fonction LECS 22, abréviation anglo-saxonne de LAN Emulation Configuration Server, et
- une fonction MPS 23, abréviation anglaise de MPOA server,
les trois dernières fonctions sont désignées dans la description pour des raisons de simplification par l'expression «fonction serveur » et présentent des caractéristiques connues de l'art antérieur.

La figure 4 détaille un exemple de réalisation d'une fonction d'accès IP 20 implantée dans un noeud et présentant des caractéristiques selon l'invention.

Cette fonction d'accès IP 20 dénotée par le sigle FAx où l'indice x correspond au noeud concerné, ici le noeud X comporte par exemple:
- un LEC transit 201 dénoté Tx, ayant l'indice du noeud concerné, LEC étant l'abréviation anglo-saxonne de LAN Emulation Client,
- n LECs routeur 202 dénotés Rix où n est le nombre de VLANs, i correspond à l'indentificateur du VLAN et x l'indice du noeud concerné,
- une fonction de relayage 203, qui reçoit le paquet IP et le traite en fonction de son en-tête, par exemple elle modifie l'en-tête et réémet le paquet,
- une table de routage 204, contenant des données de routage,
- une fonction de routage 205,
- une fonction d'élection 206 qui permet d'attribuer la desserte de chaque VLAN à une fonction d'accès unique, et
- une liste Lx 207 de VLANs desservis.

Ces différents éléments et leurs interactions avec le réseau sont explicités ci-après.

### LEC transit 201

Le réseau support ATM comporte par exemple un LAN émulé (ELAN) dénommé ELAN de transit dont toutes les fonctions d'accès IP sont clientes par l'intermédiaire d'une fonction LEC dénommée « LEC transit «. Par exemple, la fonction LEC transit de la fonction d'accès du noeud X est notée LEC Tx. Celles des noeuds Y et Z sont respectivement notées LEC Ty et LEC Tz. Le LEC transit est relié à l'ELAN de transit.

### LEC routeur 202

A chaque VLAN est associé dans le réseau support un unique LAN émulé dénommé ELAN-pont, dont toutes les fonctions d'accès sont clientes par l'intermédiaire d'une fonction LEC (LAN Emulation Client), dénommé LEC routeur. Un ELAN-pont est désigné comme les VLAN par un identificateur i, j.....

Par exemple, la fonction d'accès IP FAx du noeud X est cliente de chaque ELAN-pont ELANi associé au VLANi, par l'intermédiaire du LEC routeur Rix.

### Liste Lx 207

Elle a notamment pour fonction d'identifier les VLANs desservis par la fonction d'accès FAx.

La constitution d'une liste Lx est par exemple effectuée de la manière suivante : pour une composante donnée d'un réseau comportant m noeuds ayant un identificateur x, y, .... et donc m listes Lm, l'intersection de deux quelconques des listes Lm correspond à l'ensemble vide.

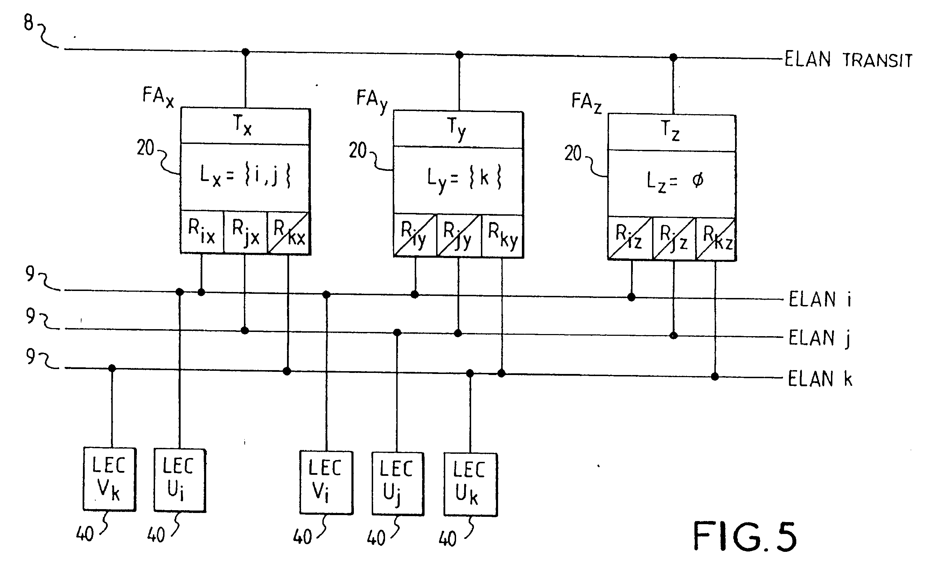

Dans l'exemple donné aux figures 1 et 5 où la composante du réseau considérée comporte trois noeuds dénotés X, Y et Z, les listes correspondantes Lx, Ly et Lz sont déterminées de façon telle que lorsque l'on prend deux quelconques de ces trois listes leur intersection est égale à ⌀. Dans cet exemple, pour le noeud X, Lx={i, j}, pour le noeud Y, Ly={k} et pour le noeud Z, Lz={}.

Il est possible d'utiliser un protocole d'élection connu de l'Homme du métier, par exemple le protocole VRRP normalisé à l'IETF sous la référence RFC 2338.

La mise en oeuvre du protocole d'élection est par exemple assurée par la fonction d'élection 206 implantée dans chaque fonction d'accès FAx, FAy, FAz et dialoguant avec les fonctions homologues des autres noeuds faisant partie de la même composante du réseau, par échange de paquets sur les ELANs-pont via les LECs routeurs Rix mentionnés.

### Fonctions de routage et de relayage et la table de routage

Les fonctions d'accès IP, FAx, FAy,....mettent en oeuvre une fonction de routage et une fonction de relayage, ainsi qu'une table de routage connues de l'art antérieur.

La fonction de routage 205 entretient une table de routage 204 grâce à un dialogue avec les fonctions de routage homologues par l'intermédiaire d'un protocole de routage.

La fonction de relayage 203 permet de relayer tout paquet provenant d'un ELAN vers un autre ELAN en fonction de son adresse IP de destination et des informations contenues dans la table de routage.

Du point de vue du routage, toutes les fonctions d'accès IP d'une même composante sont adjacentes via l'ELAN de transit. Le protocole de routage utilise l'ELAN de transit pour diffuser les informations de routage vers les homologues en direction des ELANs-pont ELANi, ELANj,....où i, j, appartiennent aux listes Lx définies en utilisant un principe mentionné ci-dessus, via les LECs routeurs associés.

Un principe de mise en oeuvre d'une fonction d'accès implantée dans un noeud, par exemple FAx implantée dans le noeud X peut être le suivant :
- La fonction d'accès IP FAx relaye par exemple tous les paquets IP reçus sur les LECs routeur LEC Rix où i appartient à Lx en se basant sur l'adresse IP destinataire et les informations contenues dans la table de routage.
- Si le destinataire du paquet IP est une fonction interne à la fonction d'accès FAx, telle que la fonction d'élection ou la fonction de routage, le paquet IP est remis directement à cette fonction interne ;
- Sinon
   - si le VLAN destinataire j par exemple, appartient à la liste Lx des VLANs destinataire, la fonction d'accès FAx active sa fonction de relayage 203 afin de relayer le paquet IP vers le LEC routeur Rjx du noeud x en liaison avec l'ELAN j relié au VLANj,
   - si le VLAN destinataire j n'appartient pas à la liste Lx, il ne fait pas partie des VLANs desservis par le noeud X le paquet IP est relayé vers le LEC transit Tx qui l'émet sur l'ELAN de transit en direction d'un LEC de transit indiqué dans la table de routage (connu sous l'expression next hop), par exemple Ty, le LEC de transit du noeud Y.
- Les LECs routeurs Rmx du noeud x où l'identifiant m n'appartient pas à la liste Lx restent inactifs, par exemple Rkx sur la figure 5. Dans ce cas, seuls les paquets IP à destination de la fonction interne d'élection sont acceptés.
- La fonction d'accès FAx relaye aussi tous les paquets IP reçus sur le LEC transit Tx en utilisant l'adresse IP destinataire et les informations contenues dans la table de routage.
   - Si le destinataire du paquet IP est la fonction interne de routage 205 implantée au niveau du noeud X, le paquet IP est remis directement à cette fonction,
   - Si le paquet est à destination d'un VLANi desservi par la fonction d'accès FAx c'est-à-dire appartenant à la liste Lx, le paquet est relayé vers le LEC routeur de la fonction d'accès ayant pour indice l'identifiant i du VLAN et l'indice x du noeud, Rix ;
   - Si le paquet est à destination d'un VLAN non desservi par la fonction d'accès (l'identifiant i du VLAN n'appartient pas à la liste Lx, la fonction d'accès FAx relaye le paquet en tenant compte des informations contenues dans la table de routage 204 vers l'ELAN de transit.

Chaque VLANm d'identifiant m dispose d'un ou plusieurs accès au service de routage par l'intermédiaire de fonctions LEC de l'ELAN pont correspondant ELANm associé au VLANm. Ces fonctions LEC sont dénommées « LEC usager ».

Par exemple le VLANi dispose de plusieurs LECs désignés par LEC Ui, LEC Vi qui sont connectés physiquement à des noeuds quelconques du réseau support, ces LECs faisant partie de l'ELAN-pont d'identifiant i.

Certains LECs usagers peuvent être internes à un noeud du réseau, lorsque ce dernier offre des accès ethernet.

Des courts-circuits permettant l'échange de flots de données à durée suffisamment longue sont établis automatiquement par MPOA (abréviation en langue anglo-saxonne de Multiprotocol Over ATM)

La figure 5 représente un exemple d'architecture du routeur virtuel distribué selon l'invention dans une composante du réseau.

La fonction de routage virtuel distribué est réalisée par exemple par une communauté de plusieurs fonctions d'accès IP 20 référencée FAx, FAy, FAz....reliées entre elles, en émulation de réseau local, par un ELAN de transit 8 et par n ELANs-ponts 9 désignés ELANi, ELANj, ELANk où n est le nombre de VLANs et i est l'identificateur d'un VLAN.

Dans chaque commutateur par exemple le commutateur X, le LEC transit Tx est relié à l'ELAN de transit 8 et les LECs routeur Rix, Rjx, Rkx sont reliés chacun à l'ELAN-pont correspondant ELANi, ELANj, ELANk.

Pour le commutateur Y le LEC transit est relié à l'ELAN transit 8 et chaque LEC routeur est relié à l'ELAN correspondant Riy à ELANi, Rjy à l'ELANj, Rky à l'ELANk.

Pour le commutateur Z, le LEC transit est relié à l'ELAN transit 8 et chaque LEC routeur est relié à l'ELAN correspondant Riz à ELANi, Rjz à l'ELANj, Rkz à l'ELANk

Seuls sont activés les LECs routeur Rix tels que i appartient à Lx, liste des VLANs desservis contenus dans la table 207 (figure 4).

Dans l'exemple donné Lx={i, j}, Ly={k} et Lz correspond à l'ensemble vide. Cette architecture est compatible avec le réseau décrit à la figure 1. Les LEC routeurs non activés sont désignés par une croix, Rkx, Riy, Rjy, Riz, Rjz, et Rkz.

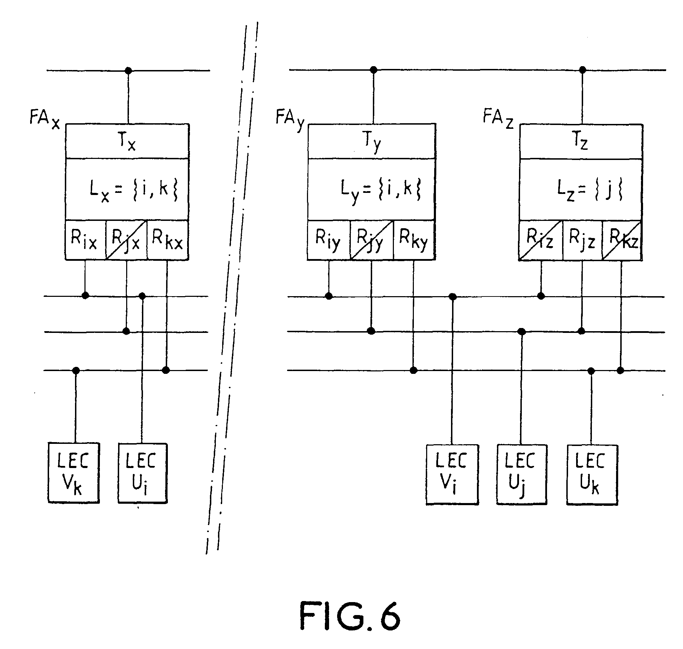

La figure 6 représente un exemple d'architecture du routeur virtuel distribué dans le cas où le réseau est scindé en deux composantes comme il a été représenté sur la figure 2.

Le tableau donné ci-dessous décrit la table d'actions à effectuer sur réception d'un paquet au noeud X.

| LEC récepteur | Destinataire du paquet | Action |
|---|---|---|
| <tous sauf LEC **Tx**> | Fonction d'élection | Remettre à la fonction d'élection |
| **Rix**, **Rjx** ou **Tx** | Fonction de routage | Remettre à la fonction de |
| | | routage |
| **Rix** ou **Tx** | Usager de ELAN j | Relayer vers **Rjx** |
| **Rix, Rjx** ou **Tx** | Usager de ELAN k | Relayer vers **Tx** *(next* hop **Ty**) |
| **Rjx** ou **Tx** | Usager de ELAN i | Relayer vers **Rix** |
| Dans tous les autres cas : | | Détruire le paquet |

Dans tous les exemples de réalisation décrits ci-dessus, le réseau support peut être un réseau de niveau (2) selon la terminologie connue de l'Homme du métier.

## Revendications

1. Réseau support (1) comportant un routeur virtuel distributé (1), ledit réseau support comportant une ou plusieurs composantes, chacune des composantes comportant au moins deux noeuds (2), communiquant entre eux à l'aide d'une artère (3), chaque noeud comporte une fonction d'accès (20) et des fonctions serveurs (21, 22, 23) **caractérisé en ce que** au moins une composante dudit réseau comporte les éléments suivants :
• plusieurs LANs émulés, chacun desdits LANs émulés offrant un service de pontage et étant désigné par un identificateur i, et étant appelé ELANi-pont dans la suite, chaque ELANi-pont étant relié à un réseau virtuel VLANi,
• au moins un LAN émulé, appelé ELAN transit, où du point de vue du routage toutes les fonctions d'accès d'une même composante sont adjacentes via ledit ELAN transit,
• au niveau d'une fonction d'accès (20),
• des clients d'émulation de réseau local, appelés LEC routeurs (202), adaptés pour relier la fonction d'accès (20) à au moins un ELANi-pont associé à un VLANi, seuls lesdits LEC routeurs (202) sont activés en respectant la correspondance avec les VLANi desservis, les autres restant inactifs,
• des moyens (207) d'identification des VLANi desservis par la fonction d'accès (20),
• des clients d'émulation de réseau local, appelés LEC transit (201), pour relier l'ELAN transit à la fonction d'accès.

2. Réseau support selon la revendication 1 **caractérisé en ce que** les moyens d'identification (207) sont une liste définie de la manière suivante : pour une composante du réseau comprenant m noeuds, donc m listes Lm, l'intersection de deux quelconques des listes Lm est l'ensemble vide.

3. Réseau support selon la revendication 2 **caractérisé en ce qu'**il comporte une fonction d'élection (206) implantée au niveau de la fonction d'accès (20) dialoguant avec les fonctions homologues par échange de paquets sur les ELANi-pont en utilisant les LECs routeurs (202).

4. Réseau support selon la revendication 3 **caractérisé en ce que** la fonction d'élection comprend le protocole normalisé VRRP.

5. Réseau support selon l'une des revendications 1 à 4 **caractérisé en ce que** le réseau est un réseau support de type ATM avec des paquets de données de type IP.

6. Procédé de routage dans un réseau de commutation comportant une ou plusieurs composantes, la ou les composantes comportant au moins deux noeuds X, Y reliés par une artère de communication, chacun des noeuds comprenant une fonction d'accès (20), **caractérisé en ce que** au moins une composante dudit réseau comporte plusieurs LANs émulés, chacun desdits LANs émulés offrant un service de pontage et étant désigné par un identificateur i, et étant appelé ELANi-pont dans la suite, chaque ELANi-pont étant relié à un réseau virtuel VLANi, **en ce que** ladite composante comporte au moins un LAN émulé, appelé ELAN transit, où du point de vue du routage toutes les fonctions d'accès d'une même composante sont adjacentes via ledit ELAN transit, **en ce que** la fonction d'accès comprend des clients d'émulation de réseau local, appelés LEC routeurs (202), adaptés pour relier la fonction d'accès (20) à au moins un ELANi-pont associé à un VLANi, seuls sont activés les LEC routeurs qui correspondent avec les VLANi desservis, les autres restent inactifs, et **en ce que** ladite fonction d'accès (20) comprend un client d'émulation de réseau local, appelé LEC transit (201), pour relier l'ELAN transit à la fonction d'accès, le procédé comporte au moins une étape où la fonction d'accès relaye un paquet de données reçus sur un des LEC, ledit LEC étant un LEC routeur (202) ou un LEC transit (201), de la manière suivante :
a) si le destinataire du paquet est une fonction interne de routage implantée au niveau d'un noeud X (2), remettre directement le paquet à ladite fonction,
b) si le destinataire du paquet est un VLANi desservi par la fonction d'accès (20), relayer le paquet de données vers le LEC routeur (202) du noeud X (2) qui correspond avec ledit VLANi desservi,
c) si le destinataire du paquet est un VLANi non desservi, relayer le paquet vers le LEC transit d'un noeud Y (2).

7. Procédé de routage selon la revendication précédente 6 **caractérisé en ce que** la fonction d'accès (20) comprend une liste (207) identifiant les VLANi desservis, une table de routage (204), et une fonction de relayage (203) **en ce que** l'étape b) est effectuée de la manière suivante :
• si le VLAN destinataire d'identificateur j appartient à la liste (207), activer la fonction de relayage (203) de la fonction d'accès (20) et relayer le paquet de données vers le LEC routeur (202), ayant pour identificateur l'identificateur du VLAN destinataire,
et **en ce que** l'étape c) est effectuée de la manière suivante :
• si le VLAN destinataire n'appartient pas à la liste (207), relayer le paquet de données vers le LEC transit mentionné dans la table de routage (204).

8. Procédé de routage selon l'une des revendications 6 et 7 **caractérisé en ce que** l'étape de relayage est effectuée pour un paquet de données reçu sur le LEC routeur implanté dans une fonction d'accès.

9. Procédé de routage selon l'une des revendications 6 et 7 **caractérisé en ce que** l'étape de relayage est effectuée pour un paquet de données reçu sur le LEC transit implantée dans une fonction d'accès (20).

10. Procédé de routage selon l'une des revendications 6 à 9 utilisant un réseau support de type ATM et des paquets de données IP.

## Claims

1. Network support(1) comprising a distributed virtual router (1), the said network support comprising one or more components, each of the components comprising at least two nodes (2), intercommunicating with the aid of an artery (3), each node comprises an access function (20) and server functions (21, 22, 23), **characterized in that** at least one component of the said network comprises the following elements:
• several emulated LANs, each of the said emulated LANs offering a bridging service and being designated by an identifier i, and being called ELANi-bridge in what follows, each ELANi-bridge being linked to a virtual network VLANi,
• at least one emulated LAN, called a transit ELAN, where from the point of view of the routing all the access functions of one and the same component are adjacent via the said transit ELAN,
• at the level of an access function (20),
• local network emulation clients, called router LECs (202), adapted to link the access function (20) to at least one ELANi-bridge associated with a VLANi, only the said router LECs (202) are activated while complying with the correspondence with the serviced VLANi, the others remaining inactive,
• means (207) of identification of the VLANi serviced by the access function (20),
• local network emulation clients, called transit LECs (201), for linking the transit ELAN to the access function.

2. Network support according to Claim 1, **characterized in that** the means of identification (207) are a list defined in the following manner: for a component of the network comprising m nodes, hence m lists Lm, the intersection of any two of the lists Lm is the empty set.

3. Network support according to Claim 2, **characterized in that** it comprises an election function (206) implanted at the level of the access function (20) dialoguing with the homologous functions by exchanging packets on the ELANi-bridges using the router LECs (202).

4. Network support according to Claim 3, **characterized in that** the election function comprises the VRRP standardized protocol.

5. Network support according to one of Claims 1 to 4, **characterized in that** the network is an ATM type network support with IP type data packets.

6. Method of routing in a switching network comprising one or more components, the component or components comprising at least two nodes X, Y linked by a communication artery, each of the nodes comprising an access function (20), **characterized in that** at least one component of the said network comprises several emulated LANs, each of the said emulated LANs offering a bridging service and being designated by an identifier i, and being called ELANi-bridge in what follows, each ELANi-bridge being linked to a virtual network VLANi, **in that** the said component comprises at least one emulated LAN, called a transit ELAN, where from the point of view of the routing all the access functions of one and the same component are adjacent via the said transit ELAN, **in that** the access function comprises local network emulation clients, called router LECs (202), adapted to link the access function (20) to at least one ELANi-bridge associated with a VLANi, only the router LECs (202) which correspond with the serviced VLANi are activated, the others remaining inactive, and **in that** the said access function (20) comprises a local network emulation client, called transit LEC (201), for linking the transit ELAN to the access function, the method comprises at least one step where the access function relays a data packet received on one of the LECs, the said LEC being a router LEC (202) or a transit LEC (201), in the following manner:
a) if the addressee of the packet is an internal routing function implanted at the level of a node X (2), handing the packet directly over to the said function,
b) if the addressee of the packet is a VLANi serviced by the access function (20), relaying the data packet to the router LEC (202) of the node X (2) which corresponds with the said service VLANi,
c) if the addressee of the packet is a non-serviced VLANi, relaying the packet to the transit LEC of a node Y (2).

7. Method of routing according to the preceding Claim 6, **characterized in that** the access function (20) comprises a list (207) identifying the VLANi serviced, a routing table (204), a relaying function (203), **in that** step b) is performed in the following manner:
• if the addressee VLAN with identifier j belongs to the list (207), activating the relaying function (203) of the access function (20) and relaying the data packet to the router LEC (202), having the identifier of the addressee VLAN as identifier,
**in that** step c) is performed in the following manner:
• if the addressee VLAN does not belong to the list (207), relaying the data packet to the transit LEC mentioned in the routing table (204).

8. Method of routing according to one of Claims 6 and 7, **characterized in that** the relaying step is performed for a data packet received on the router LEC implanted in an access function.

9. Method of routing according to one of Claims 6 and 7, **characterized in that** the relaying step is performed by a data packet received on the transit LEC implanted in an access function (20).

10. Method of routing according to one of Claims 6 to 9, using an ATM type network support and IP data packets.

## Patentansprüche

1. Trägernetz (1), das einen verteilten virtuellen Router umfasst, wobei das Trägernetz eine oder mehrere Komponenten umfasst, wovon jede wenigstens zwei Knoten (2) umfasst, die untereinander mit Hilfe eines Hauptwegs (3) kommunizieren, wobei jeder Knoten eine Zugriffsfunktion (20) und Server-Funktionen (21, 22, 23) besitzt, **dadurch gekennzeichnet, dass** wenigstens eine Komponente des Netzes die folgenden Elemente umfasst:
• mehrere emulierte LANs, wovon jedes einen Brückendienst anbietet und durch einen Identifizierer i bezeichnet wird und im Folgenden ELANi-Brücke genannt wird, wobei jede ELANi-Brücke mit einem virtuellen Netz VLANi verbunden ist,
• wenigstens ein emuliertes LAN, das Transit-ELAN genannt wird, in dem unter dem Gesichtspunkt der Lenkung alle Zugriffsfunktionen derselben Komponente über das Transit-ELAN benachbart sind, und
• auf der Ebene einer Zugriffsfunktion (20),
• Emulations-Clients des lokalen Netzes, die LEC-Router (202) genannt werden und so beschaffen sind, dass sie die Zugriffsfunktion (20) mit wenigstens einer einem VLANi zugeordneten ELANi-Brücke verbinden, wobei nur jene LEC-Router (202), die die Korrespondenz mit den bedienten VLANi berücksichtigen, aktiviert werden, während die anderen inaktiv bleiben,
• Mittel (207) zum Identifizieren der bedienten VLANi durch die Zugriffsfunktion (20), und
• Emulations-Clients des lokalen Netzes, die Transit-LEC (201) genannt werden, um das Transit-ELAN mit der Zugriffsfunktion zu verbinden.

2. Trägernetz nach Anspruch 1, **dadurch gekennzeichnet, dass** die Identifizierungsmittel (207) eine auf folgende Weise definierte Liste sind: für eine Komponente des Netzes, die m Knoten und daher m Listen Lm umfasst, ist die Schnittmenge von zwei beliebigen Listen Lm insgesamt leer.

3. Trägernetz nach Anspruch 2, **dadurch gekennzeichnet, dass** es eine Auswahlfunktion (206) umfasst, die auf Höhe der Zugriffsfunktion (20) implantiert ist und mit den homologen Funktionen einen Dialog führt, indem sie Pakete auf den ELANi-Brücken unter Verwendung der LEC-Router (202) austauscht.

4. Trägernetz nach Anspruch 3, **dadurch gekennzeichnet, dass** die Auswahlfunktion das genormte VRRP-Protokoll enthält.

5. Trägernetz nach einem der Ansprüche 1 bis 4, **dadurch gekennzeichnet, dass** das Netz ein Trägernetz des ATM-Typs ist und die Datenpakete vom IP-Typ sind.

6. Lenkungsverfahren in einem Kommunikationsnetz, das eine oder mehrere Komponenten umfasst, wobei die Komponente(n) wenigstens zwei Knoten X, Y umfasst (umfassen), die über einen Verkehrsweg miteinander verbunden sind, wobei die Knoten eine Zugriffsfunktion (20) aufweisen, **dadurch gekennzeichnet, dass** wenigstens eine Komponente des Netzes mehrere emulierte LANs umfasst, wovon jedes einen Überbrückungsdienst anbietet und durch einen Identifizierer i bezeichnet wird und im Folgenden ELANi-Brücke genannt wird, wobei jede ELANi-Brücke mit einem virtuellen Netz VLANi verbunden ist, dass jede Komponenten wenigstens ein emuliertes LAN, das Transit-ELAN genannt wird, umfasst, wo unter dem Gesichtspunkt der Lenkung alle Zugriffsfunktionen derselben Komponente über das Transit-ELAN benachbart sind, dass die Zugriffsfunktion Emulations-Clients des lokalen Netzes, die LEC-Router (202) genannt werden, umfasst, die so beschaffen sind, dass sie die Zugriffsfunktion (20) mit wenigstens einer einem VLANi zugeordneten ELANi-Brücke verbinden, wobei nur jene LEC-Router aktiviert werden, die den bedienten VLANi entsprechen, während die anderen inaktiv bleiben, und dass die Zugriffsfunktion (20) einen Emulations-Client des lokalen Netzes, der Transit-LEC (201) genannt wird, umfasst, um das Transit-ELAN mit der Zugriffsfunktion zu verbinden,
wobei das Verfahren wenigstens einen Schritt umfasst, bei dem die Zugriffsfunktion ein bei einem der LEC empfangenes Datenpaket, das bei einem der LECs empfangen wird, der entweder ein Router-LEC (202) oder ein Transit-LEC (201) ist, auf die folgende Weise überträgt:
a) falls das Ziel des Pakets eine interne Lenkungsfunktion ist, die auf Höhe eines Knotens X(2) implantiert ist, direktes Abgeben des Pakets an die Funktion,
b) falls das Ziel des Pakets ein durch die Zugriffsfunktion (20) bedientes VLANi ist, Übertragen des Datenpakets an den LEC-Router (202) des Knotens X (2), der dem bedienten VLANi entspricht,
c) falls das Ziel des Pakets ein nicht bedientes VLANi ist, Übertragen des Pakets an den Transit-LEC eines Knotens Y (2).

7. Lenkungsverfahren nach dem vorhergehenden Anspruch 6, **dadurch gekennzeichnet, dass** die Zugriffsfunktion (20) eine Liste (207), die die bedienten VLANi identifiziert, eine Lenkungstabelle (204) und eine Übertragungsfunktion (203) umfasst und dass der Schritt b) auf die folgende Weise ausgeführt wird:
• falls das Ziel-VLAN des Identifizierers j zu der Liste (207) gehört, Aktivieren der Übertragungsfunktion (203) der Zugriffsfunktion (20) und Übertragen des Datenpakets an den LEC-Router (202), der als Identifizierer den Identifizierer des Ziel-VLAN hat,
• und dass der Schritt c) auf die folgende Weise ausgeführt wird:
• falls das Ziel-VLAN nicht zu der Liste (207) gehört, Übertragen des Datenpakets an den in der Lenkungstabelle (204) genannten Transit-LEC.

8. Lenkungsverfahren nach einem der Ansprüche 6 und 7, **dadurch gekennzeichnet, dass** der Übertragungsschritt für ein Datenpaket ausgeführt wird, das bei dem Router-LEC empfangen wird, der in eine Zugriffsfunktion implantiert ist.

9. Lenkungsverfahren nach einem der Ansprüche 6 und 7, **dadurch gekennzeichnet, dass** der Übertragungsschritt für ein Datenpaket ausgeführt wird, das bei dem Transit-LEC empfangen wird, der in eine Zugriffsfunktion (20) implantiert ist.

10. Lenkungsverfahren nach einem der Ansprüche 6 bis 9, das ein Trägernetz des ATM-Typs und IP-Datenpakete verwendet.
